# EUROPEAN PATENT APPLICATION

(11) **EP 0 854 649 A2**
(43) Date of publication of application: **22.07.1998**
(21) Application number: 98300229.6
(22) Date of filing: 14.01.1998
(51) Int. Cl.: H04N 7/088

(54) **Television broadcasting system and receiver**

(30) Priority: 16.01.1997 JP 5129/97
(71) Applicant: Digital Vision Laboratories, Minato-ku, Tokyo (JP)
(72) Inventor: Otake, Kazuo, Minato-ku, Tokyo (JP); Morimoto, Yoshiaki, Minato-ku, Tokyo (JP)
(74) Representative: Cooper, John

(57) **Abstract**

Herein disclosed is a television broadcasting system (20; 40) for transmitting a television broadcasting signal to real-timely output a diversity of information in connection with a television program. The television system (20; 40) comprises a storage device (28) for storing a predetermined script program (S), which is activated by an event (I), and a receiver (20, 21; 40) for receiving the television broadcasting signal including a marker (M) for specifying the event (I). Since the script program (S) is previously translated and stored in the storage device (28), the script program (Sc) can be immediately executed in response to the reception of the marker (M). In the television broadcasting system (20; 40), the receiver (20, 21; 40), therefore, can real-timely output the information in connection with the television program whenever the sender (10), e.g., the broadcaster station, requires that the information is outputted.

## Description

### BACKGROUND OF THE INVENTION

### 1. Field of the Invention

The present invention relates to a television broadcasting system, receiver for and method of transmitting a television broadcasting signal. In particular, the television broadcasting system, receiver and method are capable of real-timely outputting a diversity of information in connection with a television program when a predetermined script program is executed in response to the reception of an event.

### 2. Description of the Related Art

There have so far been proposed various television broadcasting systems for transmitting a television broadcasting signal including digital data, such as a predetermined script program. The script program is activated by an event, so that the television broadcasting receiver can output a diversity of information in connection with the television program. The television broadcasting system includes an analog television broadcasting system, such as "Intercast" developed by Intel Corporation in U.S.A., "Bitcast/VBI" developed by Infocity Inc. in Japan or "Intertext" (commonly referred to as "IT VISION") developed in Japan. The television broadcasting system uses an unused portion of vertical blanking interval (hereinlater referred to as "VBI") for transmitting the digital data. For instance, the Intercast system and the Bitcast/VBI system comprise computers, while the Intertext system comprises a television set. Both of the computer and the television set include a receiver for receiving the television broadcasting signal through the broadcasting waves. In general, the television broadcasting system transmits a plurality of static images at rates of thirty static images per second. The receiver successively receives the images to output video on its screen. Each of the static images is transmitted at intervals of the VBI. The VBI includes twenty-one scan lines. The 1st to the 9th scan lines of the VBI are utilized for a vertical synchronization on the screen. The 14th to the 21st scan lines of the VBI are utilized for such as teletext broadcasting or the other controls. The unused 10th to 13th scan lines of the VBI are utilized for the transmission of the digital data, such as the script program, in the television broadcasting system.

The television broadcasting system further includes a digital television broadcasting system. The digital television broadcasting system is generally adapted to a time division multiplexing system, e.g., MPEG2-TS (Moving Picture Expert Group phase 2 Transport Stream), in which the digital data are assembled into several packets to be transmitted. The foregoing system is cited in an international standard "ISO/IEC 13818-1 Information technology - Generic coding of moving picture and associated audio Information: System". In the digital television broadcasting system, the packets include an audio packet, a video packet and a data packet. Each of the packets has a packet identifier (hereinlater referred to simply as "PID") area in which the PID is designated.

The television broadcasting system thus constructed can simultaneously output not only the television program but also the information in accordance with the transmitted digital data. In typical television broadcasting system, the display on its screen is divided into a plurality of views including a main view and a side view. For instance, the television receiver in the Intertext system provides the user with the main view of the baseball game program and the side view of various information on a score on the baseball game or profiles of the baseball teams.

It will be explained the operation of the conventional television broadcasting system hereinlater.

In the conventional television broadcasting system, at the almost same time that the television broadcasting signal is transmitted from the broadcaster station, the television program is displayed in the main view on the screen. The signal transmission path delay in the circuit of the receiver is negligible. This means that the loss of the transmission between a sender, i.e., the broadcaster station, and the receiver in the television broadcasting system, is substantially equal to zero.

However, the receiver cannot display the information in the side view on the screen without the execution of the script program as if the receiver receives the television broadcasting signal including the script program. In short, the broadcaster station is only adapted to a server for providing with the digital data which is utilized for the generation of the side view. The receiver comprises execution means, such as a microcomputer, for executing the script program.

It takes not only a transmission time **Tα** to transmit the digital data such as the script program from the sender to the receiver but also an execution time **Tβ** to execute the script program to output the information when the receiver simultaneously displays the information in addition to the television program on its screen. Accordingly, it takes times of the execution time **Tβ** in addition to the transmission time **Tα** to display the information resulting from the execution of the script program in the side view on the screen.

However, a drawback encountered in a prior-art television broadcasting system of the above described nature is that it is impossible to real-timely output the information in the side view on the screen in connection with the television program in the main view on the screen, because of the fact that it takes times of **Tα+Tβ** to output the information in the side view on the screen in comparison with that it takes no time to output the television program in the main view on the screen. As if the receiver simultaneously receives the script program and the marker, the information in connection with the television program cannot be real-timely outputted on the screen.

### SUMMARY OF THE INVENTION

It is an object of the present invention to provide a television broadcasting system for transmitting a television broadcasting signal to real-timely output a diversity of information in connection with a television program.

It is another object of the present invention to provide a television broadcasting receiver for receiving a television broadcasting signal to real-timely output a diversity of information in connection with a television program under the control of the sender.

It is yet object of the present invention to provide a television broadcasting method of transmitting a television broadcasting signal to real-timely output a diversity of information in connection with a television program under the control of the sender.

In accordance with a first aspect of the present invention, there is provided a television broadcasting system for transmitting a television broadcasting signal to real-timely output a diversity of information in connection with a television program. The system comprises a storage device for storing a predetermined script program which is activated by an event; a receiver for receiving the television broadcasting signal including a marker for specifying the event; event generation means for generating the event in response to the reception of the marker; and execution means for executing the script program to output the information when the script program is activated by the generated event.

The television broadcasting system thus constructed can execute the script program to output the information under the control of the sender, i.e., a broadcaster station.

In the television broadcasting system, the script program may be previously transmitted in the television broadcasting signal. The television broadcasting signal may be a digital television broadcasting signal. Alternatively, the marker may be transmitted through a predetermined part of scan lines in vertical blanking interval of a broadcasting wave. Furthermore, the script program may be transmitted through a predetermined part of scan lines in vertical blanking interval of a broadcasting wave. The receiver may be a television receiver or a computer.

In accordance with a second aspect of the present invention, there is provided a television broadcasting receiver for receiving a television broadcasting signal to real-timely output a diversity of information in connection with a television program. The television broadcasting receiver comprises: a storage device for storing a predetermined script program, which is activated by an event. The event is specified by a marker which is contained in the received television broadcasting signal. The receiver further comprises event generation means for generating the event in response to the reception of the marker; and execution means for executing the script program to output the information when the script program is activated by the generated event.

The television broadcasting signal may be a digital television broadcasting signal. The television broadcasting receiver may receive the marker through a predetermined part of scan lines in vertical blanking interval of a broadcasting wave. The television broadcasting receiver may also receive the script program through a predetermined part of scan lines in vertical blanking interval of a broadcasting wave. Furthermore, the television broadcasting receiver may be included in a television receiver or a computer.

In accordance with a third aspect of the present invention, there is provided a television broadcasting method of transmitting a television broadcasting signal to real-timely output a diversity of information in connection with a television program. The television broadcasting method comprises the steps of:
(a) transmitting the television broadcasting signal including a script program which is activated by an event to output the information; and
(b) transmitting the television broadcasting signal including a marker for specifying the event after the script program is transmitted in the step (a).

The television broadcasting method further comprises the steps of:
(c) preparing a script program which is activated by an event to output the information; and
(d) receiving the television broadcasting signal including a marker for specifying the event.

The television broadcasting method further comprises the steps of:
(e) generating the event in response to the reception of the marker in the step (d); and
(f) executing the script program to output the information when the script program is activated by the event generated in the step (e).

The television broadcasting method further comprises the step of receiving the television broadcasting signal including the script program previous to receiving the marker in the step (b).

### BRIEF DESCRIPTION OF THE DRAWINGS

The present invention and many of the attendant advantages thereof will be better understood from the following detailed description when considered in connection with the accompanying drawings, wherein:
FIG. 1 is a block diagram of a preferred embodiment of the television broadcasting system according to the present invention;
FIG. 2 is a block diagram of the television set shown in FIG. 1; and
FIG. 3 is a block diagram of an alternate embodiment of the television broadcasting system adapted to the digital television broadcasting system.

### DESCRIPTION OF THE PREFERRED EMBODIMENTS

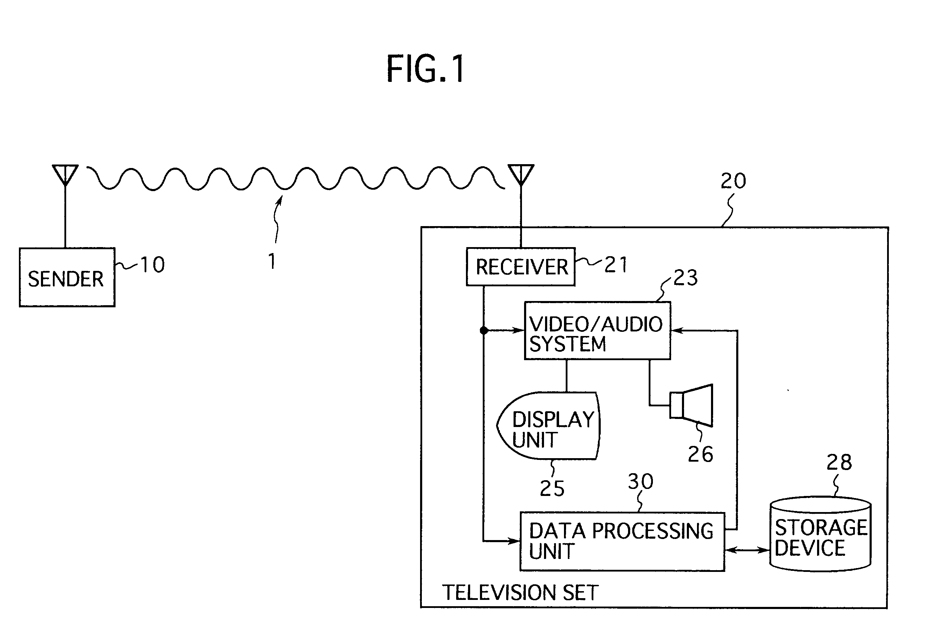

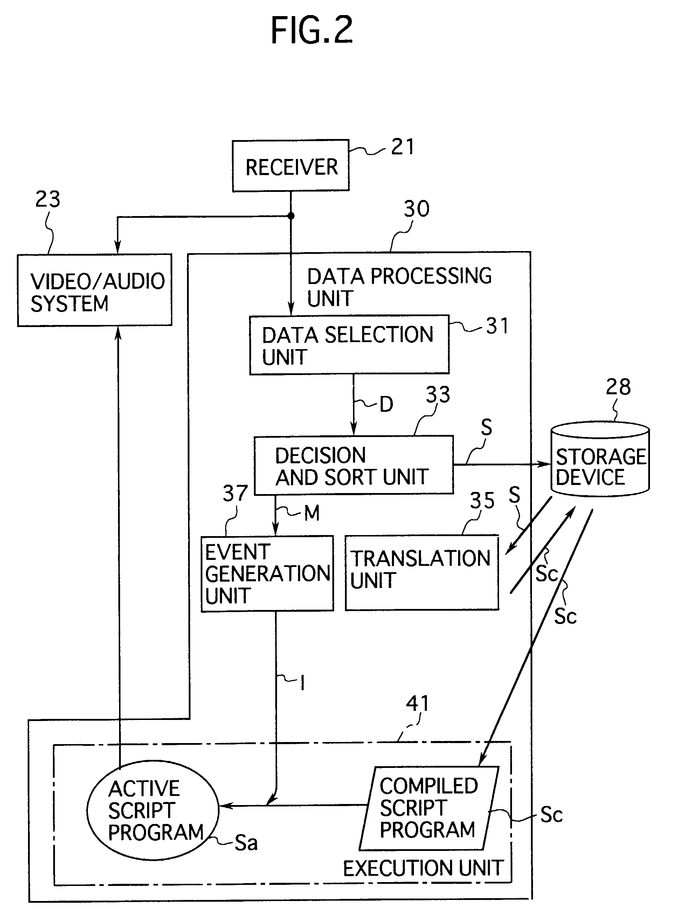

Referring to FIGS. 1 and 2 of the drawings, there is shown a preferred embodiment of the television broadcasting system according to the present invention, in particular adapted to the Intertext system, which will be described hereinlater.

As shown in FIG. 1, the television broadcasting system comprises a sender 10, e.g., a broadcaster station, for transmitting a television broadcasting signal through a broadcasting wave 1 and a television set 20 for receiving the television broadcasting signal. The television set 20 comprises a receiver 21 for receiving the television broadcasting signal on the broadcasting wave 1 and a video/audio system 23 for outputting video and audio through a display unit 25 and a speaker 26, respectively, in accordance with the received television broadcasting signal. In the Intertext system, the television set 20 further receives a predetermined script program for outputting information in addition to the television program. The script program is transmitted from the sender 10 through the unused scan lines in VBI of the broadcasting wave 1 and stored in a storage device 28. Alternatively, the script program may be previously installed into the storage device 28 from the other storage media. Further alternatively, the script program may be previously loaded into the storage device 28 through a communication line, such as a telephone line.

The script program is activated by an event. The television broadcasting signal includes a marker for specifying the event. The marker is transmitted from the sender 1 through the unused scan lines in VBI of the broadcasting wave 1. The script program has predetermined procedures written in variety types of languages such as Java or the other high-level languages. These types of script programs are activated in response to the event, so that the procedures can be performed. The script program may have predetermined documents written in variety types of languages such as a hypertext markup language. These types of script programs can generate the documents in response to the event. The documents may include audio and video data, so that the audio and video data can be outputted.

The television set 20 further comprises a data processing unit 30 having a data selection unit 31, a decision and sort unit 33, a translation unit 35, an event generation unit 37 and an execution unit 41 as more specifically illustrated in FIG. 2. The data processing unit 30 is designed to output a diversity of information in connection with the television program, when the script program is activated by the event.

The decision and sort unit 33 is designed to select data corresponding to the unused scan lines in the VBI from among the received television broadcasting signal. The selected data is represented by the symbol "**D**" in FIG. 2. The decision and sort unit 33 is decided whether the data **D** has a marker **M** or not, so that the data **D** is sort into the script program **S** and the marker **M**. The decision may be made upon whether the first byte of the data **D** is equal to a predetermined value, for instance, "00H", or not. When the first byte of the data **D** is equal to the predetermined value, the first byte of the data **D** is regarded as the marker **M** and the following bytes of the data **D** except the first byte is regarded as the script program **S**.

The translation unit 35 is designed to translate the script program **S** into an executable form by compiling the script program **S** or into an output form by expanding or allocating data in the script program **S**. The translated script program is represented by the symbol "**Sc**" in FIG. 2. The translated script program **Sc** is stored in the storage device 28. The event generation unit 37 is designed to generate the event **I** in accordance with the marker **M**.

The execution unit 41 is operable to execute the script program **Sc** in response to the generated event **I**. The active script program Sa is executed by the execution unit 41 to output the information into the video/audio system 23, so that the information can be outputted to the display unit 25 and the speaker 26 of the video/audio system 23. The execution unit 41 is also operable to generate the document in response to the event. The generated document is outputted into the video/audio system 23, so that the information included in the document can be outputted to the display unit 25 and the speaker 26 of the video/audio system 23.

It will be explained hereinlater the operation of the television broadcasting system according to the present invention.

In this embodiment, the sender 10 provides with a predetermined script program **S0** and a predetermined marker **M0**. The script program **S0** is an event activated type of the program, and has a predetermined procedure **P0** of displaying information on a profile of the baseball player which is activated by a predetermined event **I0**. The script program **S0** is operable to execute the procedure **P0** in response to the event **I0**.

The sender 10 previously sends a first data **D1** including the script program **S0** toward the receiver 21 of the television set 20 in a first VBI. The first data **D1** may include the marker **M'** having another event **I'** utilized for another script program **S'**.

The receiver 21 of the television set 20 receives the television broadcasting signal transmitted from the sender 10 through the broadcasting wave 1. The received television broadcasting signal is utilized for the generation of video and audio in the video/audio system 23. Since the operation of the video/audio system 23 has been well known in the prior art, the detailed descriptions of the operation of the video/audio system 23 will be eliminated from these specifications.

The first data **D1** corresponding to the 10th to 13th scan lines in the first VBI is selected from among the all of the scan lines in the VBI of the received broadcasting wave by the data selection unit 31. The first data **D1** is sorted into the script program **S0** and the marker **M'**. The script program **S0** is translated by the translation unit 35 into an executable form of the script program **Sc0**. The translated script program **Sc0** is stored in the storage device 28.

After at least the aforementioned times of **Tα+Tβ** has passed since the first data **D1** was transmitted from the sender 10, the sender 10 sends a second data **D2** including the marker **M0** toward the receiver 21 of the television set 20 in a second VBI. The second data **D2** may include the script program **S"** having another procedure **P"** activated by another event **I"**.

The receiver 21 of the television set 20 receives the television broadcasting signal transmitted from the sender 10 through the broadcasting wave 1. The received television broadcasting signal is utilized for the generation of video and audio in the video/audio system 23. The second data **D2** corresponding to the 10th to 13th scan lines in the second VBI is selected from among the all of the scan lines in the second VBI of the received broadcasting wave by the data selection unit 31. The second data **D2** is sorted into the script program **S"** and the marker **M0**. The script program **S"** is translated by the translation unit 35 into an executable form of the script program **Sc"**. The translated script program **Sc"** is stored in the storage device 28.

In accordance with the marker **M0,** the event generation unit 37 generates an event **I0**. The event **I0** is passed to the execution unit 41. The script program **S0** previously stored in the storage device 28 is activated in response to the generated event **I0**, so that the procedure **P0** is executed.

Therefore, the information on the profile of the baseball player is displayed on the side view of the screen, while the baseball game program is displayed on the main view of the screen in the video/audio system 23. Both of the views can be real-timely outputted under the controls of the sender 10. When the baseball game program is outputted in the main view of the screen by relay, the information on a profile of the baseball player who makes a hit and is zoomed in the main view of the screen can be real-timely outputted in connection with the baseball game program. This operation can be performed by transmitting the marker **M0** in timing with zooming in on the baseball player.

In this embodiment, the data **D** is composed of 1byte corresponding to the marker **M** and 22bytes corresponding to the script program **S**. The marker **M** in the data **D** may be composed of 1bit, if the transmission quality is sufficient to precisely receive the data **D**.

Alternatively, the data **D** may comprise a field corresponding to the marker **M** for specifying types of the events, so that a plurality of the events are selectively generated in accordance with the specifications in the field of the data **D**.

Further alternatively, the data **D** may comprise an information field having information on a history of the marker **M** in the data **D** and may be periodically sent. If the occurrence of the transmission error results in the loss of the marker **M** in the former received data **D**, the marker **M** is obtained by the later received data **D**.

Preferably, the interval of the transmissions of the data **D** including the marker **M** is previously determined, thereby facilitating the processes in the receiver.

Thus, the television broadcasting system according to the present invention has an advantage over the prior-art system in making it possible to control the execution of the script program by the sender with ease, because of the fact that, in the television broadcasting system, the script program is previously stored in the storage device and activated by the event which is generated in response to the reception of the marker. The television broadcasting system can real-timely output the information in connection with the television program under the controls of the sender.

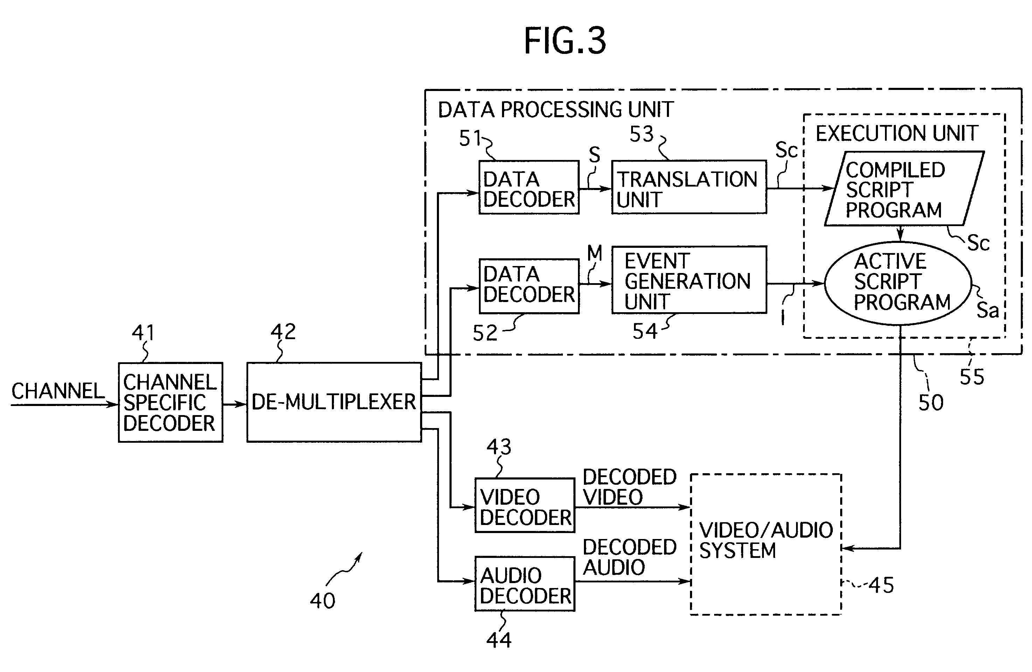

Referring to FIG. 3 of the drawings, an alternate embodiment of the television broadcasting system according to the present invention will be described hereinlater. The television broadcasting system is particularly adapted to the digital television broadcasting system, such as the time division multiplexing system described above.

As shown in FIG. 3, the television broadcasting system comprises a video/audio system 45, a channel specific decoder 41, a de-multiplexer 42, a video decoder 43 and an audio decoder 44. The channel specific decoder 41 is designed to select a channel corresponding to a specific transport stream from among a plurality of channels. The de-multiplexer 42 is designed to separate the transport stream into four types of packet in accordance with the packet identifier in this embodiment. The four types of packet include a video packet, an audio packet, a script program packet and a marker packet. The video packet is decoded by the video decoder 43, while the audio packet is decoded by the audio decoder 44. The video/audio system 45 is operated to output the decoded video and audio. The foregoing operation has been well known in the digital television broadcasting system, so that the descriptions of the operation will be eliminated in this specification.

The television broadcasting system shown in FIG. 3 further comprises a data processing unit 50 for real-timely outputting a diversity of information in connection with the television program. The data processing unit 50 comprises first and second data decoders 51 and 52, a translation unit 53, an event generation unit 54 and an execution unit 55. The translation unit 53, the event generation unit 54 and the execution unit 55 are the same as the translation unit 35, the event generation unit 37 and the execution unit 41 shown in FIG. 2. The first and second data decoders 51 and 52 are designed to decode the script program packet and the marker packet into the script program and the marker, respectively. The decoded script program and the decoded marker are processed by the translation unit 53 and the event generation unit 54, respectively, in the same manner as that in the translation unit 35 and the event generation unit 37 of the data processing unit 30 shown in FIG. 2.

The script program may be previously stored in a storage device (not shown). The script program may not be translated by the translation unit 53 until the request for translating the script program is made.

The digital television broadcasting system thus constructed has an advantage over the prior art system in real-timely outputting the information in connection with the television program. This results in the fact that the television broadcasting system of the present invention can be adapted to the digital television broadcasting system. In this embodiment, the receiver, therefore, can real-timely output the information in connection with the television program whenever the sender, e.g., the broadcaster station, requires that the information is outputted.

Alternatively, the television broadcasting system may be adapted to another multiplexing system, such as CCITT (International Telegraph and Telephone Consultative Committee) recommendation H.221, for transmitting a signal including a video, an audio and digital data. The signal may be separated and decoded into the video, the audio and the digital data in the manner according to the CCITT recommendation H.221.

Further alternatively, the television broadcasting system may transmit digital data including a script program and a marker through a communication line, such as a telephone line. It is unnecessary to separate the digital data from the television broadcasting signal. The digital data transmitted through the communication line is directly inputted into a data decoder, so that the digital data is separated and decoded into the script program and the marker.

The many features and advantages of the invention are apparent from the detailed specification, and thus it is intended by the appended claims to cover all such features and advantages of the invention which fall within the true spirit and scope thereof. Further, since numerous modifications and changes will readily occur to those skilled in the art, it is not desired to limit the invention to the exact construction and operation illustrated and described herein, and accordingly, all suitable modifications and equivalents may be construed as being encompassed within the scope of the invention.

## Claims

1. A television broadcasting system for transmitting a television broadcasting signal to real-timely output a diversity of information in connection with a television program, comprising:
a storage device (28) for storing a predetermined script program (S) which is activated by an event (I);
a receiver (20, 21; 40) for receiving said television broadcasting signal including a marker (M) for specifying said event (I);
event generation means (37; 54) for generating said event (I) in response to the reception of said marker (M); and
execution means (41; 55) for executing said script program (S) to output said information when said script program (S) is activated by the generated event (I).

2. A television broadcasting system as set forth in claim 1, in which said script program (S) is previously transmitted in said television broadcasting signal.

3. A television broadcasting system as set forth in claim 1, in which said television broadcasting signal is a digital television broadcasting signal.

4. A television broadcasting system as set forth in claim 1, in which said marker (M) is transmitted through a predetermined part of scan lines in vertical blanking interval of a broadcasting wave (1).

5. A television broadcasting system as set forth in claim 2, in which said script program (S) is transmitted through a predetermined part of scan lines in vertical blanking interval of a broadcasting wave (1).

6. A television broadcasting system as set forth in claim 1, in which said receiver (20, 21; 40) is a television receiver.

7. A television broadcasting system as set forth in claim 1, in which said receiver (20, 21; 40) is a computer.

8. A television broadcasting receiver (20; 40) for receiving a television broadcasting signal to real-timely output a diversity of information in connection with a television program, comprising:
a storage device (28) for storing a predetermined script program (S), which is activated by an event (I), said event (I) being specified by a marker (M) which is contained in the received television broadcasting signal;
event generation means (37; 54) for generating said event (I) in response to the reception of said marker (M); and
execution means (41; 55) for executing said script program (S) to output said information when said script program (S) is activated by the generated event (I).

9. A television broadcasting receiver (20; 40) as set forth in claim 8, in which said television broadcasting signal is a digital television broadcasting signal.

10. A television broadcasting receiver (20; 40) as set forth in claim 8, receiving said marker (M) through a predetermined part of scan lines in vertical blanking interval of a broadcasting wave (1).

11. A television broadcasting receiver (20; 40) as set forth in claim 8, receiving said script program (S) through a predetermined part of scan lines in vertical blanking interval of a broadcasting wave (1).

12. A television broadcasting receiver (20; 40) as set forth in claim 8, being included in a television receiver.

13. A television broadcasting receiver (20; 40) as set forth in claim 8, being included in a computer.

14. A television broadcasting method of transmitting a television broadcasting signal to real-timely output a diversity of information in connection with a television program, comprising the steps of:
(a) transmitting said television broadcasting signal including a script program (S) which is activated by an event (I) to output said information; and
(b) transmitting said television broadcasting signal including a marker (M) for specifying said event (I) after said script program (S) is transmitted in said step (a).

15. A television broadcasting method of transmitting a television broadcasting signal to real-timely output a diversity of information in connection with a television program, comprising the steps of:
(a) preparing a script program (S) which is activated by an event (I) to output said information; and
(b) receiving said television broadcasting signal including a marker (M) for specifying said event (I).

16. A television broadcasting method as set forth in claim 15, further comprising the steps of:
(c) generating said event (I) in response to the reception of said marker (M) in said step (b); and
(d) executing said script program (S) to output said information when said script program (S) is activated by the event (I) generated in the step (c).

17. A television broadcasting method as set forth in claim 15, further comprising the step of receiving said television broadcasting signal including said script program (S) previous to receiving said marker (M) in said step (b).
